# EUROPÄISCHE PATENTSCHRIFT

(11) **EP 0 790 902 B1**
(45) Veröffentlichungstag und Bekanntmachung des Hinweises auf die Patenterteilung: **12.12.2001**
(21) Anmeldenummer: 96931043.2
(22) Anmeldetag: 06.09.1996
(51) Int. Cl.: B60N 2/44

(54) **VERFAHREN ZUM HERSTELLEN DES RAHMENS DER LEHNE EINES KRAFTFAHRZEUGSITZES**
PROCESS FOR MANUFACTURING THE FRAME OF A BACK REST OF A VEHICLE SEAT
PROCEDE DE PRODUCTION DU BATI DU DOSSIER D'UN SIEGE DE VEHICULE

(30) Priorität: 08.09.1995 AT 14295
(43) Veröffentlichungstag der Anmeldung: 27.08.1997
(73) Patentinhaber: Euromotive Gesellschaft m.b.H., 5282 Ranshofen (AT)
(72) Erfinder: GARNWEIDNER, Peter, A-5112 Lamprechtshausen 429 (AT)
(74) Vertreter: Kilian, Helmut, Dr.
(86) Internationale Anmeldenummer: EP9603925
(87) Internationale Veröffentlichungsnummer: WO9709196

(56) Entgegenhaltungen:
- EP-A- 0 625 445
- DE-A- 4 138 647
- PATENT ABSTRACTS OF JAPAN vol. 011, no. 247 (M-615), 12.August 1987 & JP 62 057724 A (KAIJIRUSHI HAMONO KAIHATSU CENTER:KK), 13.März 1987,

## Beschreibung

Die Erfindung betrifft ein Verfahren zur Herstellung des Rahmens der Lehne eines Kraftfahrzeuges aus einem ursprünglich geraden metallischen Profilteil mit konstanter Querschnittsfläche, dessen Länge der gestreckten Länge des Lehnenrahmens entspricht, das aus zwei außen liegenden Gurten und einem oder mehreren Stegen, welche die beiden außen liegenden Gurte miteinander verbinden, besteht, und das um Achsen, welche zumindest etwa parallel zur Fläche eines Steges und zumindest etwa normal zur Profilrichtung liegen, U-förmig gebogen wird. Ein derartiges Verfahren ist an sich bekannt.

Aus der DE-A-4 138 647 ist weiterhin ein Rücklehnenrahmen eines Sitzes bekannt, der aus einem metallichen Profilteil in Form eines Hohlprofils gebildet ist und U-förmig gebogen ist. Das Profilteil bei diesem bekannten Rücklehnenrahmen hat über seine gesamte Länge dieselbe Querschnittsform.

Lehnenrahmen von Kraftfahrzeugsitzen bestehen im Normalfall aus Metall und haben die Form eines auf dem Kopf stehenden U. Die Schenkel des U werden des weiteren als Längsholme bezeichnet, das Basisstück als Querholm.

Der Lehnenrahmen wird bei frontalen Stößen (von hinten oder von vorne) auf das Fahrzeug am stärksten belastet, wenn die den Sitz benützende Person mit Rumpf und Kopf gegen Lehne und Kopfstütze geschleudert wird. Dabei werden die Längsholme auf Biegung um eine waagerechte, quer zur Fahrtrichtung liegende Achse belastet.

Der Querholm wird auf Biegung um eine Achse belastet, welche die Schnittlinie zwischen der Lehnenebene und einer vertikal, parallel zur Fahrtrichtung liegenden Ebene bildet. An den Stellen der Kopfstützenbefestigung wird der Querholm auf Torsion belastet.

Das größte Biegemoment tritt an den sitzflächenseitigen Enden der Längsholme auf. Mit zunehmendem Abstand von diesen Enden wird die Biegebeanspruchung in den Längsholmen geringer.

Im Sinne des Leichtbaues sollte das den Lehnenrahmen bildende Metallteil an allen Stellen eine der standzuhaltende Maximalbelastung möglichst genau angepaßte Querschnittsfläche aufweisen. Lehnenrahmen, welche aus einem gebogenen Rundrohr oder Strangpreßprofil gebildet werden, welche über ihre Länge eine konstante Querschnittsfläche haben, sind daher nachteilig, da die durch die Stellen größtmöglicher Beanspruchung bedingte Mindestquerschnittsfläche auch an jenen Stellen beibehalten wird, an denen niemals eine große Beanspruchung zu erwarten ist.

Der Nachteil des konstanten Profilquerschnittes wird bei Rahmen, welche aus Gußteilen oder aus gefalteten oder gebogenen Blechen gefertigt werden, umgangen. Solche Rahmen bedingen jedoch hohe Werkzeugkosten und eine höhere Anzahl aufwendiger Herstellungsschritte und Qualitätssicherungsmaßnahmen. Gußteile haben überdies eine geringe Duktilität, d.h. daß sie bei geringer Verformung brechen.

Die der Erfindung zugrundeliegende Aufgabe besteht daher darin, ein Verfahren der eingangs genannten Art zu schaffen, mit dem ein Rahmen der Lehne eines Kraftfahrzeuges hergestellt werden kann, dessen Querschnittsfläche an die an den jeweiligen Stellen zu erwartende Maximalbeanspruchung angepaßt ist.

Diese Aufgabe wird gemäß der Erfindung dadurch gelöst, daß in einem Abstand von den Enden des Profilteils in dessen Steg eine auf dessen Fläche normal stehende, durchgehende Öffnung gebildet wird, in der Fläche des Steges in der Richtung normal auf die Profilrichtung gegenüberliegende Randbereiche dieser Öffnung durch den Druck von zwei Preßbacken, welche außen an den Stegen anliegen, sich in jenem Längsbereich des Profilteiles erstrecken, in welchen sich die Öffnung erstreckt, und sich normal zur Profilrichtung parallel zur Ebene des Steges aufeinander zu bewegen, aufeinander zu bewegt werden, bis die Randbereiche der Öffnung aneinander zum Anliegen kommen und einen Stoß bilden, und am Stoß die beiden daran aneinander anliegenden Flächenteile des Steges miteinander verbunden werden.

Besonders bevorzugte Weiterbildungen des erfindungsgemäßen Verfahrens sind Gegenstand der Ansprüche 2 bis 4.

Die Erfindung wird anhand der Zeichnungen anschaulicher:

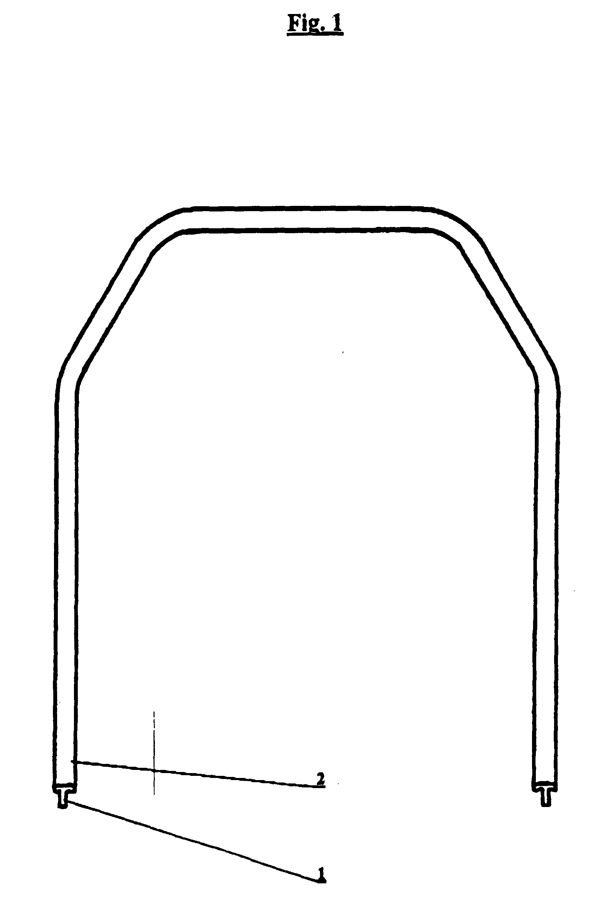

- Fig. 1: zeigt einen Lehnenrahmen in einer Frontalansicht.

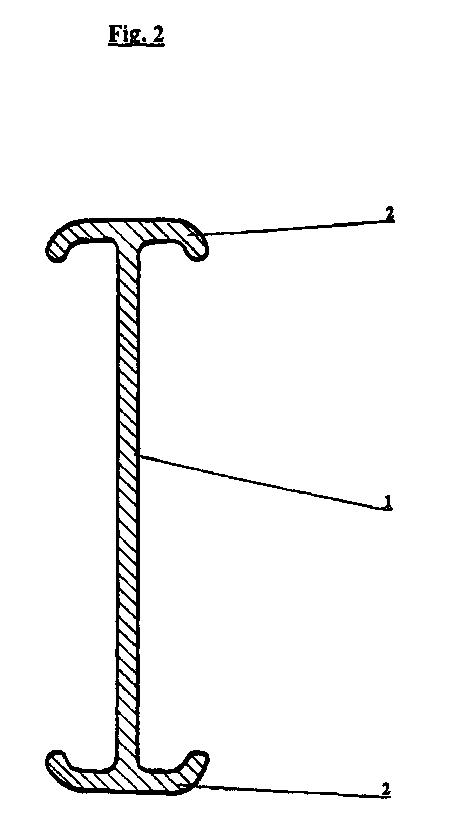

- Fig. 2: zeigt die ursprüngliche Querschnittsfläche des als Ausgangsmaterial für den Lehnenrahmen verwendeten Profilteiles (vergrößert).
- Fig. 3: zeigt das als Ausgangsmaterial für den Lehnenrahmen verwendete unverformte Profilteil mit Blickrichtung normal auf die Ebene des Steges. Die für das hier beschriebene Verfahren wichtige Öffnung 3 ist auch dargestellt. Weitere Öffnungen, welche zum Befestigen des Lehnenrahmens oder zum Befestigen von Teilen am Lehnenrahmen dienen, sind nicht dargestellt. Die Öffnungen werden vorzugsweise gestanzt.
- Fig. 4: zeigt das als Ausgangsmaterial für den Lehnenrahmen verwendete Profilteil nachdem es in seinem Mittelteil in der Ebene seines Steges 1 normal zu seiner Längsrichtung zusammengedrückt wurde so, daß die in Fig. 3 sichtbare längliche Öffnung 3 im Mittelteil des Profilteiles zu einem Stoß 4 geschlossen wurde.

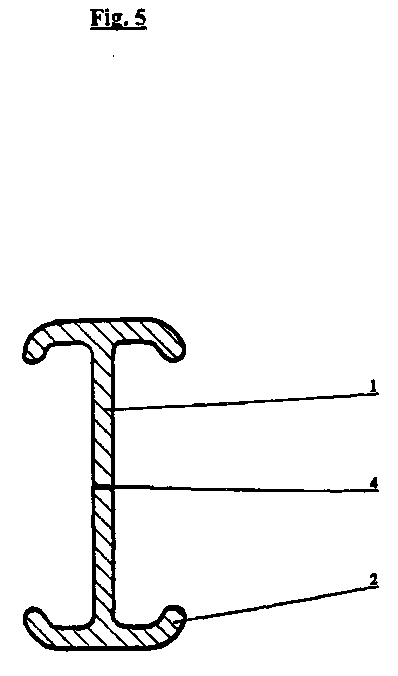

- Fig. 5: zeigt die veränderte Querschnittsfläche im mittleren Bereich des Profilteiles.

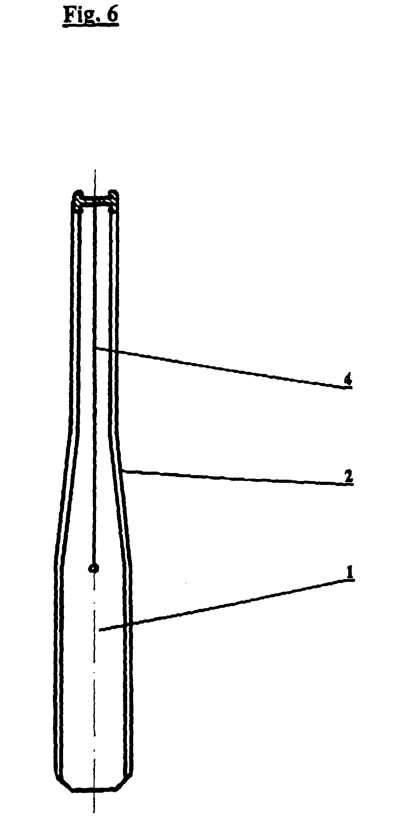

- Fig. 6: zeigt den Rahmen von Fig. 1 in einer seitlichen Teilschnittansicht.

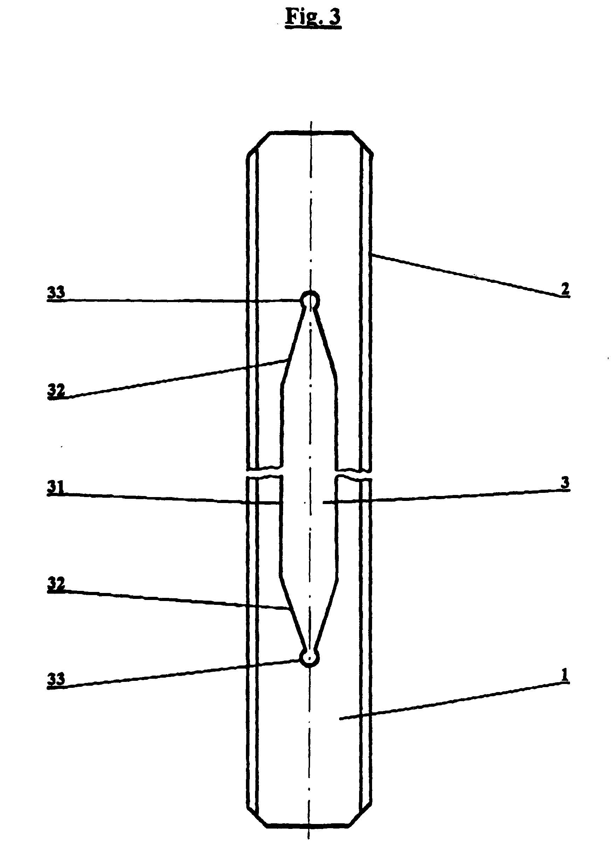

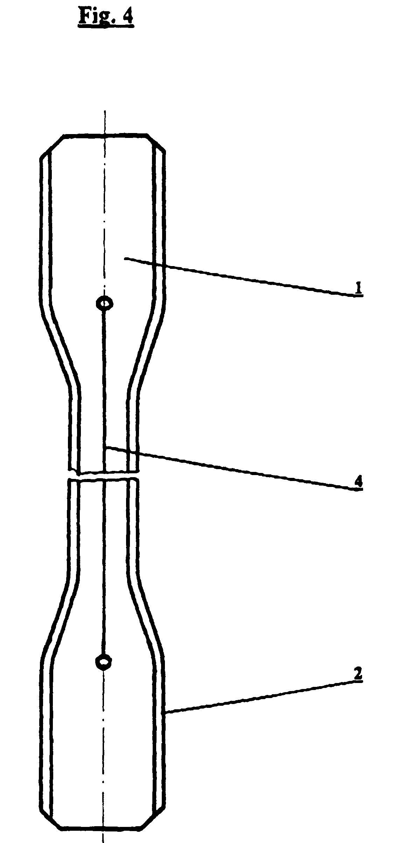

Wie in Fig. 3 gut ersichtlich, wird im Bereich der Längsmitte des Profilteiles vorzugsweise der Mittelteil des Steges 1 entfernt, so daß eine in der Richtung normal auf die Ebene des Steges 1 durchgehende Öffnung 3 gebildet wird. Die Teillänge des Profilteiles über die sich diese Öffnung 3 erstreckt, entspricht der Länge jenes Bereiches des Lehnenrahmens, an welchem eine gegenüber der ursprünglichen Profilquerschnittsfläche verringerte Querschnittsfläche gebildet werden soll. Dieser Bereich liegt von den Verbindungsstellen des Lehnenrahmens mit den Sitzflächenrahmen entfernt. Die Breite der Öffnung 3, also ihre Abmessung in der Ebene des Steges normal zur Profilrichtung wird einerseits durch die Belastung bestimmt, der das Profilteil jeweils an bestimmten Stellen standhalten muß, andererseits durch fertigungstechnische Umstände.
Die Öffnung 3 besteht vorzugsweise aus einem mittleren Bereich 31 mit etwa konstanter Breite, in Profilrichtung beiderseits daran anschließenden V-förmigen Bereichen 32, in denen die Breite der Öffnung von der Breite des Mittelbereiches beginnend mit steigender Entfernung davon kontinuierlich abnimmt, und daran anschließenden, zu den Bereichen 32 hin offenen etwa teilkreisförmigen Endbereichen 33. Der Durchmesser dieser Teilkreise ist klein gegenüber der maximalen Breite der Öffnung 3.
Das mit einer solchen Öffnung versehene Profilteil wird einfach durch Druck von zwei Preßbacken, welche außen an den Stegen 2 anliegen und sich über jenen Längenbereich des Profilteiles erstrecken, in welchen sich der mittlere Bereich 31 der Öffnung 3 befindet, und normal zur Profilrichtung, parallel zur Ebene des Steges 1 aufeinander zu bewegt werden, zu dem in Fig. 4 abgebildeten Teil verformt. Vor allem dann, wenn sich die Preßbacken auch über die V-förmigen. Bereiche 32 erstrecken und so geformt sind, daß sie die gewünschte äußere Kontur dieses Teiles nachbilden, werden bei diesem Verformen nur Fließbewegungen parallel zur Ebene des Steges stattfinden und somit der Steg an keiner Stelle normal zu seiner ursprünglichen Ebene aufgebogen oder verdickt.
Die Neigung der Flanken der V-förmigen Bereiche 32 der Öffnung 3 zur Profilachse hin (vor dem Verformen) ist etwa gleich jener Neigung, mit welcher die Gurte 2 nach dem Verformen von den breiteren Endbereichen des Profilteiles zum schmäleren Mittelbereich übergehen. Die optimale Form der Öffnung 3 und der Preßbacken muß durch Versuche an Probestücken ermittelt werden.
Nach diesem ersten Verformen ist die Öffnung 3 in ihrem mittleren Bereich 31 und den daran anschließenden Bereichen 32 zu einem Stoß 4 verengt. Damit die für die Biegefestigkeit des Gesamtprofiles wichtige Übertragung der Scherspannungen erfolgen kann, werden die am Stoß 4 aneinander liegenden Teilflächen des Steges 1 wieder miteinander verbunden. Das beste Verbindungsverfahren hierfür ist Schweißen. Insbesondere für Aluminiumprofile eignen sich hierzu WIG-, MIG- und Laserschweißverfahren gut.
Nach dem Schweißen wird das Profilteil wie weiter oben schon erwähnt U-förmig gebogen. Da die Schweißzone um die neutrale Zone dieser Biegeverformung liegt, finden in ihr nur sehr geringe Fließvorgänge statt. Es braucht daher im Allgemeinen keine an das Schweißen anschließende Wärmebehandlung zu erfolgen, durch welche die Verformbarkeit der Schweißzone in dem für das Biegen erforderlichen Ausmaß erhöht wird. Gegebenenfalls ist es auch möglich, erst nach dem Biegen zu schweißen. Die I-Querschnittsform ist sehr vorteilhaft, da sie alle wesentlichen Anforderungen gut erfüllt und einfach herzustellen und zu bearbeiten ist. Die Erfindung kann aber auch für Lehnen aus einem Träger mit Mehrfach-I-Querschnittsform oder mit U-Querschnittsform angewandt werden. Wesentlich ist, daß der Querschnitt zwei außen liegende Gurte 2 beinhaltet, welche durch einen oder mehrere Stege 1 miteinander verbunden werden.
Als Material für den Lehnenrahmen kommen vor allem herkömmliche strangpreßbare Aluminiumknetlegierungen in Frage. Da es möglich ist, das Profilteil als Walzprofil zu fertigen, kann auch die Verwendung von Stahl in Erwägung gezogen werden.
Bei der Herstellung entsprechend der Erfindung ergibt sich neben der Lösung der eingangs genannten Aufgabe der Vorteil, daß vom unteren Lehnenbereich zum oberen Lehnenbereich hin die auf die Lehnenebene normal liegende Dicke des Lehnenrahmens kontinuierlich abnimmt. Das kommt den Anforderungen an das Design von Lehnen sehr entgegen.

## Patentansprüche

1. Verfahren zur Herstellung des Rahmens der Lehne eines Kraftfahrzeuges aus einem ursprünglich geraden metallischen Profilteil mit konstanter Querschnittsfläche, dessen Länge der gestreckten Länge des Lehnenrahmens entspricht, das aus zwei außen liegenden Gurten (2) und einem oder mehreren Stegen (1), welche die beiden außen liegenden Gurte (2) miteinander verbinden, besteht und das um Achsen, welche zumindest etwa parallel zur Fläche eines Steges (1) und zumindest etwa normal zur Profilrichtung liegen, U-förmig gebogen wird, **dadurch gekennzeichnet, daß**
- in einem Abstand von den Enden des Profilteiles in dessen Steg (1) eine auf dessen Fläche normal stehende, durchgehende Öffnung (3) gebildet wird,
- in der Fläche des Steges (1) in der Richtung normal auf die Profilrichtung gegenüberliegende Randbereiche dieser Öffnung (3) durch den Druck von zwei Preßbacken, welche außen an den Stegen (2) anliegen, sich in jenem Längsbereich des Profilteiles erstrecken, in welchem sich die Öffnung (3) erstreckt, und sich normal zur Profilrichtung parallel zur Ebene des Steges (1) aufeinander zu bewegen, aufeinander zu bewegt werden, bis die Randbereiche der Öffnung (3) aneinander zum Anliegen kommen und einen Stoß (4) bilden, und
- am Stoß (4) die beiden daran aneinander anliegenden Flächenteile des Steges (1) miteinander verbunden werden.

2. Verfahren nach Anspruch 1, **dadurch gekennzeichnet, daß** das Profilteil eine I-förmige Querschnittsfläche hat und die Öffnung (3) so ausgebildet wird, daß sie zwei in Profilrichtung außen liegende, etwa teilkreisförmige Bereiche (33) umfaßt, welche zur Profilmitte hin in daran anschließende Bereiche (32) münden, welche sich zur Profilmitte hin V-förmig erweitern und schließlich in eine gemeinsame Mittelzone (31) mit etwa konstanter Breite übergehen.

3. Verfahren nach Anspruch 1 oder 2, **dadurch gekennzeichnet, daß** das Bilden der Öffnung (3) durch Stanzen und das Verbinden am Stoß (4) durch Schweißen erfolgen.

4. Verfahren nach einem der Ansprüche 1 bis 3, **dadurch gekennzeichnet, daß** die Öffnung (3) bezüglich einer zur Längsrichtung des Profilteils parallel liegenden Ebene spiegelsymmetrisch und zur Symmetrieachse des Profilteils symmetrisch ausgebildet wird.

## Claims

1. Method of producing the frame of the backrest of a motor vehicle from an originally straight metal profile part which has a constant cross-sectional area and whose length corresponds to the length of the elongated length of the backrest frame and which profile part consists of two outwardly lying straps (2) and one or several cross-pieces (1), which connect the two outwardly lying straps (2) together, and which profile part is curved in a U-shaped manner about axes which lie at least approximately in parallel with the surface of a cross-piece (1) and lie at least perpendicularly with respect to the profile direction, **characterised in that**
- at a spaced interval from the ends of the profile part in the cross-piece (1) thereof there is formed a continuous orifice (3) which is positioned in a perpendicular manner with respect to the surface of said profile part,
- in the surface of the cross-piece (1) in the direction perpendicular to the profile direction, opposite-lying edge regions of this orifice (3) extend by virtue of the pressure of two pressing cheeks, which lie outwardly against the cross-pieces (2), in the particular longitudinal region of the profile part, in which the orifice (3) extends, and move towards each other in a perpendicular manner with respect to the profile direction in parallel with the plane of the cross-piece (1), until the edge regions of the orifice (3) move into position against each other and form a joint (4), and
- the two surface parts of the cross-piece (1) which lie against each other are connected together at the joint (4).

2. Method according to claim 1, **characterised in that** the profile part has an I-shaped cross-sectional area and the orifice (3) is formed in such a manner that it comprises two regions (33) which lie outwardly in the profile direction and are approximately partially circular in shape and which issue towards the profile middle into adjoining regions (32) which widen in a V-shaped manner towards the profile middle and finally become a common middle zone (31) having an approximately constant width.

3. Method according to claim 1 or 2, **characterised in that** the orifice (3) is formed by virtue of a stamping process and the connection at the joint (4) is produced by welding.

4. Method according to any one of the claims 1 to 3, **characterised in that** the orifice (3) is formed in a mirror-symmetrical manner in relation to a plane lying in parallel with longitudinal direction of the profile part and said orifice is formed in a symmetrical manner with respect to the axis of symmetry of the profile part.

## Revendications

1. Procédé de fabrication du bâti du dossier d'un siège de véhicule à moteur, à partir d'une pièce profilée métallique initialement droite avec une surface en coupe transversale constante, dont la longueur correspond à la longueur développée du bâti du dossier, qui est constitué de deux semelles (2) disposées à l'extérieur et d'une ou plusieurs nervures (1), qui relient les deux semelles l'une à l'autre situées à l'extérieur, et qui est replié en U autour d'axes qui sont au moins plus ou moins parallèles à la surface d'une nervure (1) et au moins plus ou moins normaux à la direction du profilé, **caractérisé en ce que**
- à une distance des extrémités de la pièce profilée, il est formé dans sa nervure (1) une ouverture traversante (3) qui est normale à sa surface,
- dans la surface de la nervure (1), dans la direction normale à la direction du profil, des zones de bord opposées de cette ouverture (3), par la pression de deux mors presseurs, qui s'appliquent extérieurement sur les nervures (2), s'étendent dans chaque zone longitudinale de la pièce profilée, dans laquelle s'étend l'ouverture (3), et se déplacent l'une vers l'autre normalement à la direction du profilé parallèlement au plan de la nervure (1), sont déplacés l'un vers l'autre jusqu'à ce que les zones de bord de l'ouverture (3) viennent s'appliquer l'une sur l'autre et forment un joint (4), et
- sur le joint (4), les deux parties de surface s'appliquant l'une sur l'autre de la nervure (1) sont reliées l'une à l'autre.

2. Procédé selon la revendication 1, **caractérisé en ce que** la pièce profilée a une surface en coupe transversale en forme de I et l'ouverture (3) est conformée de telle sorte qu'elle comprenne deux zones en forme approximative de cercles partiels (33) qui se trouvent à l'extérieur dans la direction du profilé et qui débouchent sur le centre du profilé dans des zones (32) qui s'y raccordent, s'y élargissent en forme de V en direction du centre du profilé et se terminent enfin par une zone centrale commune (31) ayant une largeur plus ou moins constante.

3. Procédé selon la revendication 1 ou 2, **caractérisé en ce que** la formation de l'ouverture (3) se fait par estampage et la liaison sur le joint (4) par soudage.

4. Procédé selon l'une quelconque des revendications 1 à 3, **caractérisé en ce que** l'ouverture (3) est conformée de manière exactement symétrique par rapport à un plan s'étendant parallèlement à la direction longitudinale de la pièce profilée et est conformée symétriquement par rapport à l'axe de symétrie de la pièce profilée.
